# EUROPÄISCHE PATENTSCHRIFT

(11) **EP 1 392 553 B1**
(45) Veröffentlichungstag und Bekanntmachung des Hinweises auf die Patenterteilung: **03.01.2007**
(21) Anmeldenummer: 02745056.8
(22) Anmeldetag: 17.05.2002
(51) Int. Cl.: B62B 3/14

(54) **STAPELBARER EINKAUFSWAGEN**
STACKABLE SHOPPING CART
CHARIOT DE SUPERMARCHE EMPILABLE

(30) Priorität: 05.06.2001 DE 20109339 U
(43) Veröffentlichungstag der Anmeldung: 03.03.2004
(73) Patentinhaber: WANZL METALLWARENFABRIK GMBH, 89336 Leipheim (DE)
(72) Erfinder: SCHEFFLER, Hans, 89233 Neu-Ulm/Burlafingen (DE)
(86) Internationale Anmeldenummer: PCT/DE2002/001767
(87) Internationale Veröffentlichungsnummer: WO 2002/098719

(56) Entgegenhaltungen:
- FR-A- 2 734 776

## Beschreibung

Die Erfindung betrifft einen stapelbaren Einkaufswagen, mit einem mit Lenkrollen ausgestatteten Fahrgestell, an dessen Vorderseite ein nach rückwärts gerichteter Träger befestigt ist, der eine Fahrrolle trägt, die zwischen den vorderen und den hinteren Lenkrollen angeordnet ist, wobei der Träger aus wenigstens einem aus Blattfederstahl gefertigten Tragstück besteht, das aufgrund seiner federnden Eigenschaften zum Andrücken der Fahrrolle auf den Fußboden bestimmt ist.

Einkaufswagen dieser Art sind beispielsweise aus der FR 2 734 776 A sind bekannt. Die mittig angeordnete Fahrrolle wirkt stabilisierend auf das Fahrverhalten des Einkaufswagens und verhindert beim Schieben ein seitliches Ausbrechen des Einkaufswagens dann, wenn dieser schwer beladen ist oder quer zu einer leicht geneigten Gefällstrecke bewegt werden soll. Dabei ist der wenigstens eine Träger, an dem sich die Fahrrolle befindet, aus Blattfederstahl gefertigt und flach liegend, also mit seinen beiden breiten Querschnittsabschnitten nach oben und nach unten weisend, angeordnet. Im Zuge kostengünstiger Fertigung ist es allgemein üblich, möglichst viele gleiche Teile bei artsverwandten Artikeln, Geräten oder Gegenständen vorzusehen. Dieses Prinzip gilt natürlich auch bei Einkaufswagen. Bezogen auf den wenigstens einen Träger hat man jedoch die Erfahrung gemacht, dass es aufgrund der unterschiedlichen Gewichte der Einkaufswagen nicht möglich ist, immer ein- und denselben Träger zu verwenden. Bei leichten Einkaufswagen kann sich die Federkraft des Trägers nachteilig so auswirken, dass die hinteren Lenkrollen des Einkaufswagens zu sehr entlastet werden, so dass diese Lenkrollen beim Schieben oder Ziehen des Einkaufswagens zu flattern beginnen oder aber die Federkraft des wenigstens einen Trägers ist bei schweren und großen Einkaufswagen zu gering, um ein seitliches Abdriften eines schwer beladenen Einkaufswagens sicher zu vermeiden.

Es ist Aufgabe der Erfindung, einen Einkaufswagen der hier vorliegenden Art so zu gestalten, dass es auf einfache und somit kostengünstige Weise möglich ist, die Federcharakteristik des wenigstens einen Trägers zu verändern.

Die Lösung der Aufgabe besteht darin, dass das wenigstens eine Tragstück verschränkt ausgebildet ist

Durch einfaches Verlängern oder Verkürzen des verschränkten Abschnittes lässt sich die Federcharakteristik verändern und somit den unterschiedlichen Anforderungen anpassen. Ein kurzer Abschnitt lässt einen "weicheren" und ein längerer Abschnitt einen "härteren" Träger entstehen.
Es empfiehlt sich, das wenigstens eine Tragstück um 90° zu verschränken und den so gestalteten Träger mit seiner Flachseite an der Vorderseite des Fahrgestelles zu befestigen, während sich der am anderen Ende des Trägers befindliche hochkant angeordnete Abschnitt hervorragend zum Anschrauben der Fahrrolle eignet.

Die Erfindung wird anhand der Zeichnungen näher erläutert. Es zeigt
Fig. 1 einen stapelbaren Einkaufswagen;
Fig. 2 ein Tragstück in räumlicher Darstellung und
Fig. 3 das gleiche Tragstück in Draufsicht.

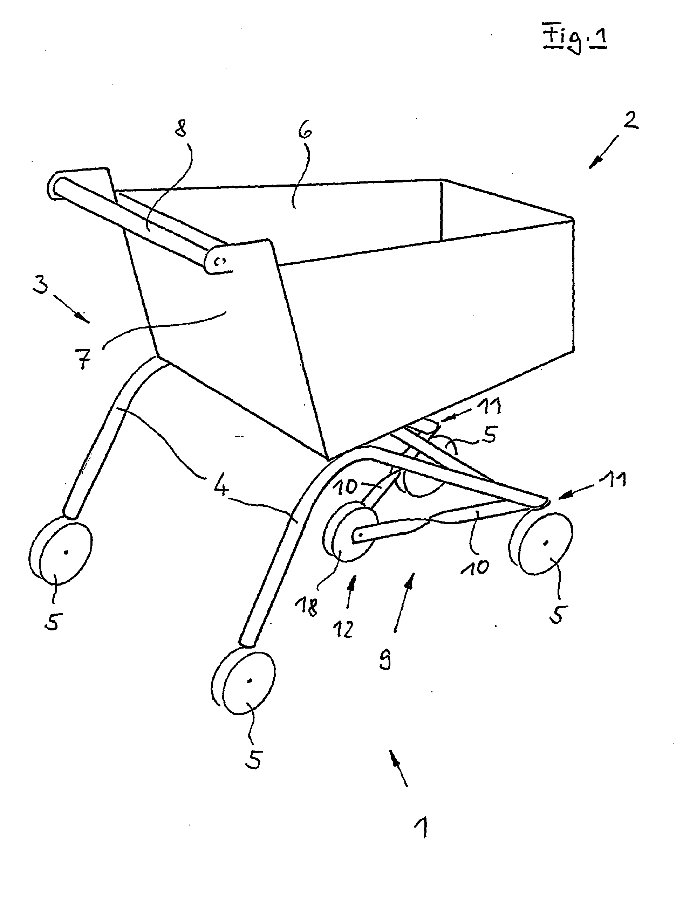

Der in Fig 1 dargestellte Einkaufswagen 1 ist in bekannter Weise so gestaltet, dass dieser sich mit gleichen Einkaufswagen 1 platzsparend in einer Reihe stapeln bzw. in einen gleichen Einkaufswagen 1 einschieben lässt. An der Vorder- und an der Rückseite 2, 3 des einen Korb 6 tragenden Fahrgestelles 4 sind Lenkrollen 5 angeordnet. Die obere Rückseite des Korbes 6 schließt mit einer Schiebeeinrichtung 8 ab, während sich die Rückwand 7 des Korbes 6 bekanntermaßen beim Stapelvorgang in das Innere des Korbes 6 verschwenken lässt. An der Vorderseite 2 des Einkaufswagens 1 ist am Fahrgestell 4 ein Träger 9 befestigt, der sich nach hinten in Richtung zu den hinteren Lenkrollen 5 erstreckt. Der Träger 9 besteht aus zwei Tragstücken 10, die mit ihrem vorderen Ende 11 nahe der vorderen Lenkrollen 5 am Fahrgestell 4 angeschraubt sind während sie mit ihrem hinteren Ende 12 eine Fahrrolle 18 tragen, die etwa mittig zwischen den vorderen und den hinteren Lenkrollen 5 angeordnet ist und zum Abstützen und Abrollen auf dem Fußboden bestimmt ist. ,Die Tragstücke 10 sind aus Blattfederstahl gefertigt und so angeordnet, dass sie federnd die Fahrrolle 18 gegen den Fußboden drücken. Im Beispiel sind die beiden Tragstücke 10 zusammen mit den vorderen Fahrrollen 5 am Fahrgestell 4 angeschraubt.

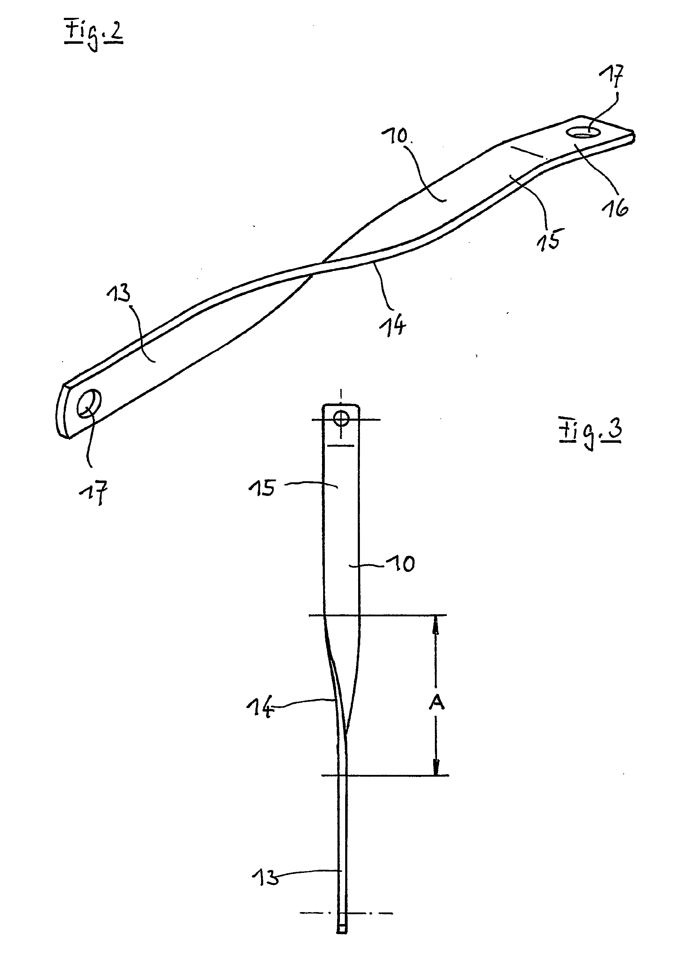

Fig. 2 zeigt ein Tragstück 10 eines Trägers 9. Der Querschnitt des Tragstückes 10 entspricht demjenigen eines Flachstahles. Links in der Zeichnung endet das Tragstück 10 mit einem hochkant angeordneten Abschnitt 13, der eine Bohrung 17 oder einen Durchbruch zur Aufnahme einer Achse aufweist, die zum Tragen der Fahrrolle 18 bestimmt ist. Dem hochkant angeordneten Abschnitt 13 folgt ein um 90° verschränkter Abschnitt 14, an den sich rechts in der Zeichnung ein flach angeordneter Abschnitt 15 anschließt, der ebenfalls eine Bohrung 17 oder einen Durchbruch aufweist, so dass das Tragstück 10 an der Vorderseite des Fahrgestelles 4 anschraubbar ist. Der flach angeordnete Abschnitt 15 weist einen leicht abgewinkelten Teilbereich 16 auf, der in Gebrauchslage des Tragstückes 10 horizontal angeordnet ist, so dass der übrige Teil des Tragstückes 10 an einem Einkaufswagen 1 montiert, nach hinten leicht abfallend angeordnet ist, vgl. Fig. 1.

Fig. 3 zeigt in einer Draufsicht das in Fig. 2 dargestellte Tragstück 10. Man erkennt unten in der Zeichnung den hochkant angeordneten Abschnitt 13. Ihm folgt der verschränkte Abschnitt 14 dessen Länge durch das Maß A gekennzeichnet ist. An den verschränkten Abschnitt 14 schließt der flach angeordnete Abschnitt 15 an. Aus der Zeichnung ist ersichtlich, dass sich die Federcharakteristik des Tragstückes 10, und damit die des Trägers 9, durch Verändern der Länge A des verschränkten Abschnittes 14 unterschiedlich festlegen lässt. Gleiches gilt auch für das Ausmaß der Verschränkung. Diese kann weniger oder auch mehr als 90° betragen. Ebenso ist es möglich, mit nur einem Tragstück 10 einen Träger 9 zu bilden, der dann beispielsweise in der Mitte der Vorderseite des Fahrgestelles 4 auf geeignete Weise am Fahrgestell 4 zu befestigen ist.

## Patentansprüche

1. Stapelbarer Einkaufswagen (1), mit einem mit Lenkrollen (5) ausgestatteten Fahrgestell (4), an dessen Vorderseite ein nach rückwärts gerichteter Träger (9) befestigt ist, der eine Fahrrolle (18) trägt, die zwischen den vorderen und den hinteren Lenkrollen (5) angeordnet ist, wobei der Träger (9) aus wenigstens einem aus Blattfederstahl gefertigten Tragstück (10) besteht, das aufgrund seiner federnden Eigenschaften zum Andrükken der Fahrrolle (18) auf den Fußboden bestimmt ist, **dadurch gekennzeichnet, dass** das wenigstens eine Tragstück (10) verschränkt ausgebildet ist.

2. Stapelbarer Einkaufswagen nach Anspruch 1, **dadurch gekennzeichnet, dass** das wenigstens eine Tragstück (10) einen hochkant angeordneten Abschnitt (13) aufweist, der zum Tragen der Fahrrolle (18) bestimmt ist.

3. Stapelbarer Einkaufswagen nach Anspruch 1 oder 2, **dadurch gekennzeichnet, dass** das wenigstens eine Tragstück (10) mit einem flach angeordneten Abschnitt (15) ausgestattet ist, der zum Anschrauben des Tragstückes (10) am Fahrgestell (4) bestimmt ist.

4. Stapelbarer Einkaufswagen nach Anspruch 3, **dadurch gekennzeichnet, dass** der flach angeordnete Abschnitt (15) des wenigstens einen Tragstückes (10) einen Teilbereich (16) aufweist, der in Gebrauchslage des wenigstens einen Tragstückes (10) horizontal angeordnet ist.

5. Stapelbarer Einkaufswagen nach einem der Ansprüche 1 bis 4, **dadurch gekennzeichnet, dass** bei Verwendung von zwei Tragstücken (10) jedes Tragstück (10) zusammen mit einer vorderen Lenkrolle (5) am Fahrgestell (4) angeschraubt ist.

## Claims

1. A stackable shopping trolley (1) with a wheel frame (4) equipped with casters (5), on the front end of which wheel frame a rearward-pointing bracket (9) is attached, which bracket bears a drive wheel (18) positioned between the anterior and the posterior casters (5), the bracket (9) consisting of at least one bracket piece (10) made of leaf-spring steel, which bracket piece is intended for pressing the drive wheel (18) to the floor on the basis of its elastic properties, **characterised in that** the at least one bracket piece (10) is of a twisted design.

2. A stackable shopping trolley according to Claim 1, **characterised in that** the at least one bracket piece (10) has an edgewise-positioned portion (13) intended for bearing the drive wheel (18).

3. A stackable shopping trolley according to Claim 1 or 2, **characterised in that** the at least one bracket piece (10) is equipped with a flat-positioned portion (15) intended for screwing the bracket piece (10) to the wheel frame (4).

4. A stackable shopping trolley according to Claim 3, **characterised in that** the flat-positioned portion (15) of the at least one bracket piece (10) has a partial region (16) which in the operating position of the at least one bracket piece (10) is positioned horizontally.

5. A stackable shopping trolley according to one of Claims 1 to 4, **characterised in that** when two bracket pieces (10) are used, each bracket piece (10) is screwed to the wheel frame (4) together with an anterior caster (5).

## Revendications

1. Chariot de supermarché emboîtable (1) comprenant un châssis (4) équipé de roulettes pivotantes (5), sur le devant duquel est fixé un support (9) pointant vers l'arrière et portant une roulette (18) disposée entre les roulettes pivotantes avant et arrière (5), le support (9) étant au moins composé d'un élément de support (10) en acier pour ressorts à lames qui, de par ses propriétés élastiques, est destiné à appliquer la roulette (18) contre le sol, **caractérisé en ce que** le au moins un élément de support (10) est réalisé vrillé.

2. Chariot de supermarché emboîtable selon la revendication 1, **caractérisé en ce que** le au moins un élément de support (10) présente un segment orienté verticalement (13), qui est destiné à porter la roulette (18).

3. Chariot de supermarché emboîtable selon la revendication 1 ou 2, **caractérisé en ce que** le au moins un élément de support (10) est équipé d'un segment disposé à plat (15), qui est destiné à visser l'élément de support (10) au châssis (4).

4. Chariot de supermarché emboîtable selon la revendication 3, **caractérisé en ce que** le segment disposé à plat (15) du au moins un élément de support (10) présente une partie (16) qui, lorsque le au moins un élément de support (10) est en position d'utilisation, est disposé horizontalement.

5. Chariot de supermarché emboîtable selon l'une des revendications 1 à 4, **caractérisé en ce que**, lorsqu'on utilise deux éléments de support (10), chaque élément de support (10) est vissé avec une roulette pivotante avant (5) au châssis (4).
